# EUROPEAN PATENT APPLICATION

(11) **EP 1 321 702 A1**
(43) Date of publication of application: **25.06.2003**
(21) Application number: 02080477.9
(22) Date of filing: 20.12.2002
(51) Int. Cl.: F16L 9/12

(54) **Reinforced permeation-proof plastic pipe**

(30) Priority: 20.12.2001 NL 1019627
(71) Applicant: Pipelife Nederland B.V., 1600 AJ Enkhuizen (NL)
(72) Inventor: Van Dam., Joris Willy Adrie, 1611 GN Bovenkarspel (NL); Dalmolen, Lambertus Gerrit Peter, 1019 SE Amsterdam (NL)
(74) Representative: van Westenbrugge, André

(57) **Abstract**

A reinforced pipe for transporting a fluid comprising aggressive gases and/or liquids, such as wet natural gas, comprising a plastic inner pipe (1) and, surrounding the inner pipe (1), a reinforcing layer (2) with fibres (10) which have a high tensile strength, such as aramid fibres or fibres made from steel with a high carbon content. A barrier layer (6), which is impermeable or of low permeability to the fluid, is located between the inner pipe (1) and the reinforcing layer (2), which barrier layer (6) is stuck so that it rests completely against the inner pipe (1).

## Description

The invention relates to a reinforced pipe for transporting a fluid comprising aggressive gases and/or liquids, such as wet natural gas, comprising a plastic inner pipe and, surrounding the inner pipe, a reinforcing layer with fibres which have a high tensile strength, such as aramid fibres or fibres made from steel with a high carbon content.

A reinforced pipe of this type is known and is used, inter alia, to transport hydrocarbons which are obtained in the exploitation of gas fields and mineral oil fields. In particular, pipes of this type are used in what are known as marginal fields. These fields contain a limited recoverable quantity, so that their exploitation costs have to remain limited in order to be able to achieve any profit. This means that the pipelines which are to be laid have to be laid without excessively high costs. In particular a plastic pipe is suitable for this purpose, since it can be transported in great lengths on a reel and can then be laid from the reel.

To keep investment costs as low as possible, moreover, expensive treatment installations, such as a desulpharization installation, are often omitted. The hydrocarbons obtained are transported directly in untreated form and at high pressure in the pipe to a central location where the necessary treatment is then carried out. The result of this is that the pipe may be exposed to relatively aggressive gases and liquids. These penetrate through the plastic inner pipe and may attack the reinforcing layer surrounding it.

A further drawback is that aggressive substances of this type may in the long term pass into the soil in which the pipe is laid. The resulting pollution may be serious: for example, a quantity of one gram of benzene can contaminate 10 cubic metres of soil.

Therefore, it is an object of the invention to provide a reinforced pipe of the type described above which avoids these drawbacks. This object is achieved by the fact that a barrier layer, which is impermeable or of low permeability to the fluid, is located between the inner pipe and the reinforcing layer, which barrier layer is stuck so that it rests completely against the inner pipe.

The barrier layer is attached to the inner pipe in such a manner that no open spaces or loose areas remain. The gases which migrate through the inner pipe are retained at the barrier layer and also cannot collect between the inner pipe and this layer. This ensures that when the pressure drops or disappears completely in the interior of the inner pipe, the latter would be compressed (rapid decompression collapse).

The outer layer, in particular the reinforced fibres therein, are as a result well protected against the influences of the gases and liquids, in such a manner that the required strength of the pipe can be retained. The barrier layer may, for example, comprise a metal layer, for example a layer of aluminium or nickel. Alternatively, the barrier layer may comprise a polymer with good barrier properties, such as polyethylene vinyl alcohol (EVOH).

The barrier layer may be coated with polyethylene on at least one surface. During production, a polyethylene coating of this type provides good adhesion during thermal welding to the plastics material of the inner pipe. To facilitate the production process, the vulnerable barrier layer may also be provided with a support, such as a PET layer, which PET layer is in turn coated with polyethylene. The barrier layer may, for example, be wound helically around the inner pipe.

The reinforcing layer may comprise a matrix of plastics material in which the fibres are imbedded.

The invention will now be explained in more detail with reference to an exemplary embodiment of a reinforced pipe according to the invention which is illustrated in the figures.
Figure 1 shows a perspective, partially cut-away view of the pipe;
Figure 2 shows a radial cross section through the wall of a first embodiment;
Figure 3 shows a second embodiment.

The reinforced pipe comprises an inner pipe 1, around which a reinforcing layer 2 of ribbon or material 3 in tape form is wound. These tapes 3 are known per se and comprise a plastic matrix in which the fibres are embedded. These fibres form a defined angle of approximately 50° with respect to the centre axis of the pipe.

According to the invention, a barrier layer 4 is arranged between the reinforcing layer 2 and the inner pipe 1. This barrier layer 4 may, for example, consist of a metal, such as aluminium or nickel, and/or of a plastic with good barrier properties, such as polyethylene vinyl alcohol. Finally, a covering layer 5 of plastic is arranged around the reinforcing layers.

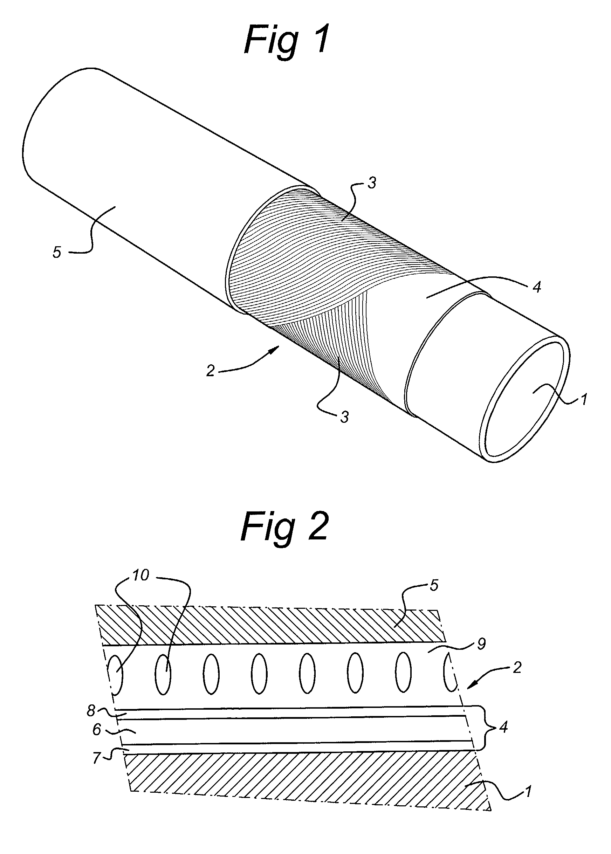

As shown in the partial longitudinal section through the wall of the pipe shown in Figure 2, a barrier layer 4, which itself comprises a layer of aluminium 6 which is coated with polyethylene layers 7, 8, has been arranged on the inner pipe 1. During the production process, the bottom polyethylene layer 7 is thermally welded to the plastics material of the inner pipe 1, in such a manner that completely flat bonding, with good contact, is obtained between the barrier layer 4 and the inner pipe.

Then, the tape 2 is stuck to the outermost polyethylene layer. As has already been mentioned, this tape comprises a plastic matrix in which the fibres 10 are embedded.

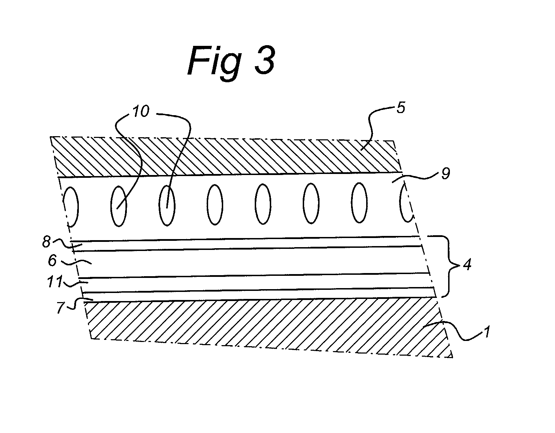

In the variant shown in Figure 3, the aluminium layer 6 has been applied to a PET layer, which in turn has been coated with the bottom polyethylene layer 7. On the other side, the second polyethylene layer 8 has in turn been applied to the aluminium layer 6. The barrier layer 4 obtained in this way, on account of the PET layer, has good mechanical properties, so that it can easily be processed during the manufacturing process without there being a high risk of it breaking or cracking.

Although in Figures 2 and 3 the metal layer bears directly against the polyethylene layer, in practice additional layers can be provided with a view to obtaining good adhesion.

## Claims

1. Reinforced pipe for transporting a fluid comprising aggressive gases and/or liquids, such as wet natural gas, comprising a plastic inner pipe (1) and, surrounding the inner pipe, a reinforcing layer (2) with fibres (10) which have a high tensile strength, such as aramid fibres or fibres made from steel with a high carbon content, **characterized in that** a barrier layer (6), which is impermeable or of low permeability to the fluid, is located between the inner pipe (1) and the reinforcing layer (2), which barrier layer (6) is stuck so that it rests completely against the inner pipe (1).

2. Pipe according to Claim 1, in which the barrier layer comprises a metal layer, such as aluminium or nickel.

3. Pipe according to Claim 2, in which the barrier layer (6) is coated with polyethylene on at least one surface.

4. Pipe according to Claim 3, in which the barrier layer (6) is coated with polyethylene (7, 8) on both surfaces.

5. Pipe according to Claim 3, in which the barrier layer (6) is coated on one side with a PET layer (11), and the PET layer (11) is coated with polyethylene (8).

6. Pipe according to Claim 1, in which the barrier layer (6) comprises a polymer with good barrier properties, such as ethylene vinyl alcohol.

7. Pipe according to one of the preceding Claims, in which the barrier layer (6) is wound around the inner pipe (1).

8. Pipe according to Claim 7, in which the barrier layer (6) runs helically around the inner pipe (1).

9. Pipe according to Claim 7, in which the barrier layer (6) is folded around the inner pipe (1).
